Europäisches Patentamt

European Patent Office

Office européen des brevets

(11) Publication number: **0 145 057**
**A2**

(12) # EUROPEAN PATENT APPLICATION

(21) Application number: **84201609.9**

(22) Date of filing: **06.11.84**

(51) Int. Cl.⁴: **G 01 M 17/04**

(30) Priority: **15.12.83 NL 8304330**

(43) Date of publication of application:
**19.06.85 Bulletin 85/25**

(84) Designated Contracting States:
**DE FR GB NL SE**

(71) Applicant: **KONI B.V.**
**Langeweg 1 P.O. Box 1014**
**NL-3260 AA Oud-Beijerland(NL)**

(72) Inventor: **Kars, Jan Willem**
**Oud Bonaventurase Dijk 97**
**NL-3291 CK Strijen(NL)**

(74) Representative: **van der Beek, George Frans et al,**
**Nederlandsch Octrooibureau Johan de Wittlaan 15 P.O.**
**Box 29720**
**NL-2502 LS 's-Gravenhage(NL)**

(54) **Apparatus for testing the shock absorbers of a motor vehicle.**

(57) An apparatus for testing the shock absorbers of a motor vehicle comprises a wheel support platform to be vibrated by a vibrating mechanism, means for measuring the minimal or maximal wheel load (R-min or R-max), means for determining the average dynamic value of minimal and maximal load

$$(\frac{R\text{-min} + R\text{-max}}{2}),$$

a divider for dividing both values and an indicating screen for making the quotient visible. The invention is based on the idea that

$$\frac{R\text{-min} + R\text{-max}}{2}$$

is a better value as a divider for obtaining a dimensionless quotient than $R_{static}$.

fig-2

LOAD CELL — AMPLIFIER — MIN WHEEL LOAD MEASURING DEVICE / AVERAGE WHEEL LOAD MEASURING DEVICE — DIVIDING MEANS — DISPLAY

EP 0 145 057 A2

- Apparatus for testing the shock absorbers of a motor
vehicle. -

The invention relates to an apparatus for testing
the shock absorbers of a motor vehicle, comprising a wheel
support platform, a vibration mechanism to vibrate said
platform, a measuring device to measure the wheel load
excerted by a vehicle wheel on the platform, said measuring
device comprising means for measuring the minimal and
maximal wheel load (R-min or R-max) and means to determine
a value lying between the minimal and maximal wheel load, a
devider for deviding both mentioned values and an
indicating screen for indicating the dimensionless
quotient.Such a device is known from US patent
specification 4 002 051.

Shock absorbers have a decisive influence on the
behaviour of a vehicle on a road and as a consequence play
an important part in road safety. The most important
function of the shock absorbers of a car is the maintaining
of the wheel-road contact, especially in the resonance
range of the wheel suspension system. To judge the quality
of a shock absorber one would have to measure the minimal
force excerted by a wheel on the road under the most
unfavourable conditions. It has appeared that a value
measured by the above mentioned apparatus is a good norm
for the quality of a shock absorber with respect to the
wheel-road contact. A wheel of a car to be tested is moved
on the wheel support platform and this platform is vibrated
with a vibration mechanism. For instance the frequency of
the vibration amounts about 25 Hz and the amplitude amounts
about 7.5 mm. This frequency is higher than the resonance
frequency of the non-spring mounted weight of the wheel
support system with respect to the car body. After
switching out the vibration mechanism the frequency with
which the wheel is moved will decrease; in the range of the
resonance frequency the deflections that is to say the
minimal as well as the maximal load excerted by the wheel on the support platform, will be maximal. In the known device one of the minimal and maximal values is measured and divided by the static wheel load, that is to say the load excerted by the respective wheel on the support platform when the platform and the wheel supported thereby are not in vibration. The minimal and maximal wheel load, as well as the static wheel load, will be dependent on the weight of the car. By dividing the minimal or maximal wheel load by the static wheel load a dimensionless value is obtained, which is independent on the weight of the car and which is a criterion for the condition of the wheel suspension that is to say for the co-operation of tire, spring and shock absorber.

The invention is based on the idea that the static wheel load is not such a good value as a divider for obtaining a dimensionless quotient than might appear at first view. As a consequence of friction in the suspension system and of differences in mass inertia and operation of internal and external shock absorber parts, a shock absorber is shorter under dynamic conditions than under static conditions. A moving car will be closer to the road than a standing car. In connection with a smaller length of a shock absorber under dynamic circumstances - in testing a shock absorber - a greater part of the weigth of the car will be taken up by the other three wheels, and the weigth load experienced by the shock absorber to be tested will be lower than under static conditions. This means that in the known measuring device R-min or R-max is divided by too a big number and that the obtained dimensionless quotient, being a standard for the quality of the absorber, is too low.

The object of the invention is to avoid this disadvantage and therefore the apparatus indicated in the preamble is characterized in that the means for determining a value lying between the minimal and maximal wheel load determine the average dynamic value of the minimal and maximal wheel load $(\frac{R\text{-}min + R\text{-}max}{2})$.

The dynamic average of R-max and R-min is a value which is indeed noticeably lower than R-static. If for instance shock absorbers with a result of 25 % and lower must be rejected, this condition will not be reached so fast when the measuring device according to the invention is applied.

The invention will now be elucidated with the aid of the figures showing an example.

Figure 1 shows a perspective view of the apparatus according to the invention.

Figure 2 shows a schedule of the measuring and indicating system of this apparatus.

Figure 3 shows two diagrams in which the course of the wheel load in the range of the resonance frequency of a rather bad and a rather good absorber is plotted against the time.

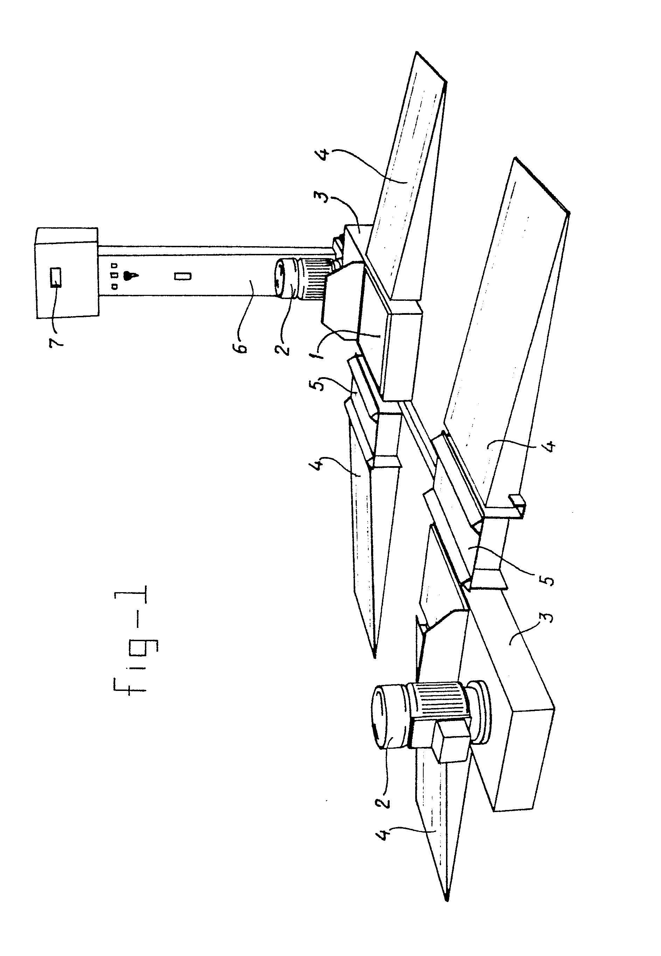

The apparatus shown in figure 1 comprises two wheel support platforms which may be vibrated by a vibrating mechanism 3 of known construction and driven by an electromotor 2. At both sides of the plates 1 there are ramps 4. When one of the wheels of a pair front or rear wheels is disposed on a wheel support platform, the other wheel of that pair will be present on a stop plate 5.

Between the driving mechanism of each wheel support platform 1 and the bottom plate of the respective vibrating mechanism 3 a force measuring instrument is mounted with which the force excerted by the wheel on the support platform can be determined.

After a vehicle is moved on a support platform 1, the concerning motor 2 is switched on and the vibrating mechanism 3 is brought on a frequency lying above the resonance frequency of the wheel suspension system. A usual frequency is 25 Hz, and the usual amplitude is 7 to 8 mm. After switching out the motor, the vibration will be gradually damped. The measuring phase has started now. The force excerted on the platform is measured and transferred to an assembly of units mounted in column 6 for processing the data. The schedule of this unit is shown in figure 3.

In the range of the own frequency of the wheel suspension system large deflections will appear which lead to maximal and minimal loads of the platform 1 by the car wheel. Figure 3 shows two diagrams of the course of this load in a wheel suspension system having a shock absorber subject to wear and a system with a new shock absorber respectively. The force is plotted on the vertical axis of the diagram, whereas the time is plotted on the horizontal axis. The static load, that is the force excerted by the wheel on the platform when the wheel is not moving (no vibration) is indicated by a dotted line. The lines a en b show the course of respectively the maximal force excerted on the platform plotted against the time.

When the resonance frequency is approached, the deflections increase until the maximal and minimal loads R-max and R-min are reached. Thereafter the deflections decrease rapidly.

The line c shows the average of the maximal and minimal load indicated by the lines a and b. Especially in the range of the resonance frequency a considerable difference exists between the dynamic average of R-max and R-min and the static load R-static. A reason for this phenomenon is that as a consequence of the friction and the difference in mass inertia of the internal and external absorber parts, a moving absorber will be shorter than a static absorber.

To get a dimensionless value independant on the weight of the car and being representative of the quality of the shock absorber, it is known to devide R-max or R-min by R-static. It appears from figure 3 that this is not in correspondence with the reality; the static load is not the average of R-max and R-min. To accomplish an improvement in this respect, R-min or R-max is divided by the dynamic average of R-min and R-max in the apparatus according to the present invention.

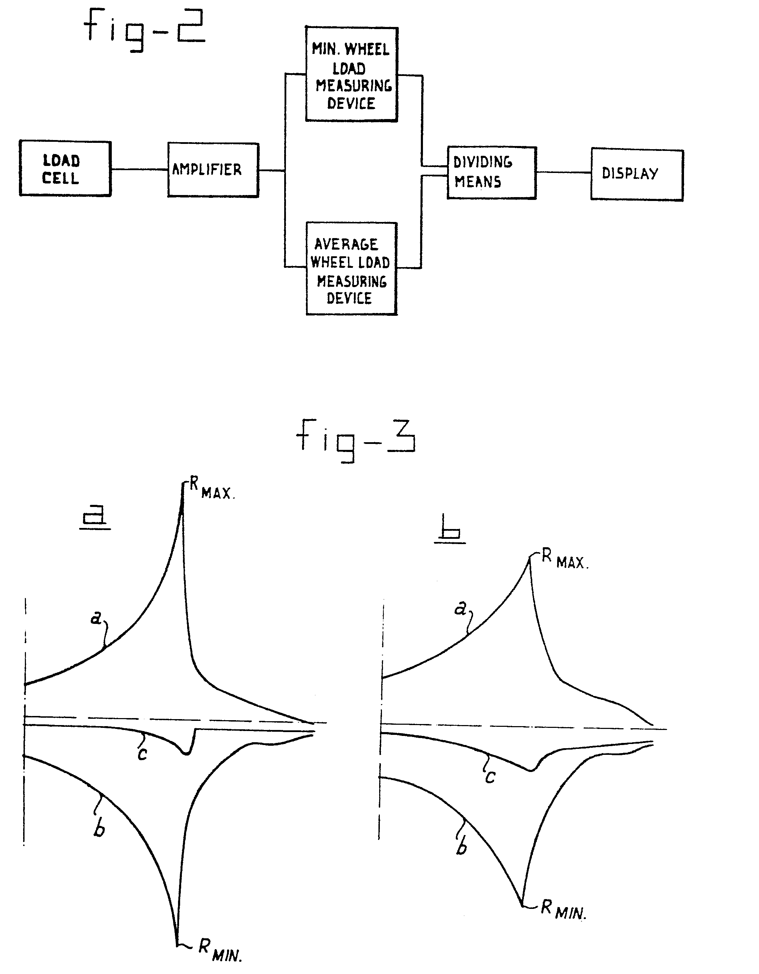

The schedule shown in figure 2 indicates that the force measured by a load cell and excerted by the wheel on the support platform 1 is converted into an electric signal which after amplification is passed to a unit for determining R-min as well as to a unit for determining R-average dynamic = $\dfrac{\text{R-min} + \text{R-max}}{2}$.

The output signals of the unit are passed to a dividing unit in which the quotient is determined which is made visible in a digital way on the indication screen.

It is not excluded that the force excerted on the platform is constantly measured and that this value is constantly divided by R-average dynamic in the electric divider, whereby the quotient is kept in a memory and the lowest value is made visible on the screen. In this case in the shown schedule the unit "Min Wheel Load Measuring Device" should be replaced by a unit "Wheel load Measuring Device", whereas between the unit "Dividing Means" and "Display" a unit "Determining Min Value" should be positioned.

A percentage will be visible on screen 7. For normal passenger cars there are the following rules:
percentage higher than 40 %: good wheel-road contact
percentage 40 - 25 %: moderate wheel-road contact
percentage 25 - 0 %: bad wheel-road contact
percentage 0 %: wheel is coming loose from the road.

For sports cars these limits are often increased by 10 %.

The most important advantage of the use of R-dynamic average instead of R-static is that the friction in the absorber and suspension and the difference in mass inertia of the internal and external shock absorber parts is eliminated, by which the measured quotient corresponds more with the reality than in the known device. Shock absorbers have to be rejected less quickly.

To obtain a dimensionless quality factor in the shown embodiment R-min is divided by R-dynamic average. However, instead of R-min it is possible to divide R-max by R-dynamic average and to use the obtained quotient as a standard.

## CLAIM

Apparatus for testing the shock absorbers of a motor vehicle, comprising a wheel support platform, a vibrating mechanism to vibrate said platform, a measuring device to measure the wheel load excerted by a motor vehicle on the platform, said measuring device comprising means for measuring the minimal or maximal wheel load (R-min or R-max) and means to determine the value lying between this minimal and maximal wheel load, a divider for dividing both said values and an indicating screen for making the dimensionless quotient visible, <u>characterized in</u>, that the means for determining a value lying between the minimal and maximal wheel load determine the average dynamic value of minimal and maximal wheel load $(\dfrac{R\text{-}min + R\text{-}max}{2})$.

Fig-1

## fig-2

```
                            ┌──────────────┐
                            │ MIN. WHEEL   │
                            │ LOAD         │
                            │ MEASURING    │
                            │ DEVICE       │
                            └──────────────┘
┌──────┐   ┌───────────┐                      ┌──────────┐   ┌─────────┐
│ LOAD │   │ AMPLIFIER │                      │ DIVIDING │   │ DISPLAY │
│ CELL │   │           │                      │ MEANS    │   │         │
└──────┘   └───────────┘                      └──────────┘   └─────────┘
                            ┌──────────────┐
                            │ AVERAGE      │
                            │ WHEEL LOAD   │
                            │ MEASURING    │
                            │ DEVICE       │
                            └──────────────┘
```

## fig-3